# FASCICULE DE BREVET EUROPEEN

(11) **EP 0 778 174 B1**
(45) Date de publication et mention de la délivrance du brevet: **30.06.1999**
(21) Numéro de dépôt: 96402675.1
(22) Date de dépôt: 09.12.1996
(51) Int. Cl.: B60N 3/00, B60J 5/04

(54) **Agencement d'une tablette dans un organe en caisson d'un véhicle automobile**
Anordnung einer Platte in einer kastenförmigen Vorrichtung eines Kraftfahrzeugs
Shelf arrangement in a box-shaped structure of a motor vehicle

(30) Priorité: 08.12.1995 FR 9514570
(43) Date de publication de la demande: 11.06.1997
(73) Titulaire: AUTOMOBILES PEUGEOT, 75116 Paris (FR); AUTOMOBILES CITROEN, 92200 Neuilly-sur-Seine (FR)
(72) Inventeur: Blondel, Jacques, 78470 Saint-Remy-Les-Chevreuse (FR)
(74) Mandataire: Moncheny, Michel

(56) Documents cités:
- DE-A- 3 523 393
- DE-C- 4 327 869
- US-A- 2 270 557
- US-A- 2 588 706
- US-A- 5 180 089
- PATENT ABSTRACTS OF JAPAN vol. 016, no. 169 (M-1239), 23 Avril 1992 & JP 04 015138 A (TOYOTA AUTOM LOOM WORKS LTD), 20 Janvier 1992,

## Description

La présente invention concerne un agencement d'une tablette dans un organe en caisson d'un véhicule automobile.

On connaît déjà dans l'état de la technique un agencement d'une tablette dans un organe en caisson d'un véhicule automobile, du type dans lequel la tablette est déformable et est déplaçable en se déformant à travers une fente ménagée dans une paroi délimitant l'organe en caisson, entre une position escamotée à l'intérieur de l'organe en caisson et une position d'utilisation à l'extérieur de cet organe dans laquelle la tablette présente une face d'appui pour un utilisateur, la tablette comprenant une série d'éléments allongés successifs ayant des bords longitudinaux articulés entre eux.

Un agencement de ce type est décrit par exemple dans US-A-2 588 706. Dans ce document, l'organe en caisson est constitué par un tableau de bord du véhicule.

L'invention a pour but d'équiper l'habitacle d'un véhicule automobile, notamment une portière latérale de ce véhicule, d'au moins une tablette utilisable par un passager installé dans l'habitacle, ceci sans réduire l'espace disponible pour ce passager.

A cet effet l'invention a pour objet un agencement d'une tablette dans un organe en caisson d'un véhicule automobile, du type précité, caractérisé en ce qu'une extrémité du premier élément articulé de la série est montée pivotante sur l'organe en caisson autour d'un axe sensiblement perpendiculaire à la face d'appui de la tablette, disposé à une extrémité de la fente d'escamotage, l'organe en caisson comprenant des moyens de rigidification de la tablette en position d'utilisation, disposés dans le prolongement de la fente à l'intérieur de l'organe en caisson, de manière que, lorsque la tablette est en position d'utilisation, les éléments articulés traversent la fente et les extrémités situées à l'intérieur de l'organe en caisson de certains de ces éléments, coopèrent avec les moyens de rigidification.

Suivant des caractéristiques de différents modes de réalisation de l'invention :
- les moyens de rigidification comprennent deux faces fixes sensiblement parallèles à la face d'appui de la tablette, entre lesquelles s'étendent les extrémités internes des éléments articulés ;
- l'axe de pivotement du premier élément articulé est matérialisé par une broche portée par deux flasques définissant les faces de rigidification de la tablette ;
- au moins certains éléments articulés ont une forme générale convergente vers leur extrémité proche de l'axe de pivotement ;
- les extrémités éloignées de l'axe de pivotement des éléments articulés forment un bord courbe de la tablette ;
- les éléments articulés ont une forme générale sensiblement prismatique, les bords articulés de deux éléments successifs étant constitués par des faces longitudinales adjacentes, ces faces étant délimitées par des arêtes jointives d'articulation, éventuellement biseautées;
- les arêtes jointives sont reliées entre elles par au moins une articulation rapportée formant charnière;
- les arêtes jointives sont reliées entre elles par au moins une articulation venue de matière avec les éléments articulés, ces éléments étant notamment en plastique ;
- l'articulation est agencée sur une face de la tablette opposée à sa face d'appui ;
- l'agencement comprend des moyens de guidage de la tablette agencés à l'intérieur de l'organe en caisson;
- les moyens de guidage comprennent un rebord courbe disposé dans le prolongement d'un bord longitudinal de la fente, permettant de maintenir la partie de la tablette, s'étendant à l'intérieur de l'organe en caisson, écartée de la paroi de cet organe dans laquelle est ménagée la fente ;
- les moyens de guidage comprennent un rail de guidage des extrémités éloignées de l'axe de pivotement des éléments articulés ;
- les premier et dernier éléments de la série comportent des butées de limitation du déplacement de cette tablette coopérant avec des butées complémentaires fixes ménagées respectivement à l'extérieur et à l'intérieur de l'organe en caisson ;
- la tablette est déplaçable à l'aide de moyens d'entraînement comprenant un câble sans fin logé dans l'organe en caisson, entraîné par des moyens manuels ou motorisés, auquel est accroché un élément articulé de la tablette ;
- la tablette est déplaçable à l'aide de moyens d'entraînement comprenant une crémaillère solidaire de la tablette engrenant avec une roue dentée montée rotative dans l'organe en caisson, entraînée par des moyens manuels ou motorisés ;
- la tablette est déplaçable à l'aide de moyens de préhension agencés sur le premier élément articulé de la série, notamment un évidement de préhension ménagé dans cet élément ;
- l'organe en caisson est délimité par deux parois opposées dont l'une est celle dans laquelle est ménagée la fente, et l'axe de pivotement est placé plus près de la paroi dans laquelle est ménagée la fente que de la paroi opposée ;
- la tablette a, en position d'utilisation, une forme générale d'éventail déployé ;
- l'organe en caisson forme une portière du véhicule automobile.

L'invention sera mieux comprise à la lecture de la description qui va suivre donnée uniquement à titre d'exemple et faite en se référant aux dessins annexés dans lesquels :
- la figure 1 est une vue en perspective de l'intérieur d'un habitacle de véhicule automobile délimité par une portière dans laquelle est agencée une tablette, selon l'invention ;
- la figure 2 est une vue en coupe suivant la ligne 2-2 de la figure 1 ;
- la figure 3 est une vue en perspective de la portière selon la flèche 3 de la figure 1, avec une coupe transversale de la portière ;
- la figure 4 est une vue en perspective de la portière, avec un arrachement, montrant une variante de réalisation des moyens de guidage de la tablette ;
- les figures 5 et 6 sont des vues schématiques en coupe transversale de la portière dans lesquelles la tablette est, respectivement, en position d'utilisation et en position escamotée ;
- les figures 7 et 8 sont des vues similaires à la figure 6 montrant, respectivement, deux modes de réalisation de moyens d'entraînement de la tablette.

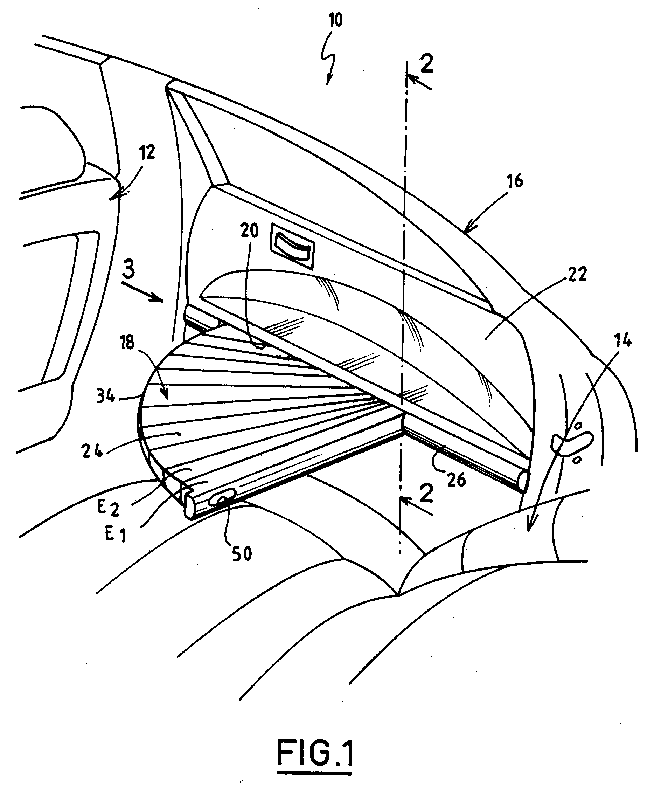

On a représenté sur la figure 1 un habitacle 10 de véhicule automobile dans lequel sont agencés de façon classique un siège avant 12 et un siège arrière 14.

On a également représenté sur cette figure une portière latérale arrière 16 formant un organe en caisson.

Une tablette 18 est agencée, selon l'invention, dans la portière 16, de manière à pouvoir être utilisée par un occupant assis dans le siège arrière 14.

La tablette 18 est déformable. Elle est déplaçable, en se déformant, à travers une fente 20 ménagée dans une paroi 22 délimitant la portière 16. Cette paroi 22 sépare l'intérieur de la portière 16 de l'habitacle.

La portière 16 est également délimitée par une paroi 23, opposée à la paroi 22, séparant l'intérieur de la portière 16 de l'extérieur du véhicule.

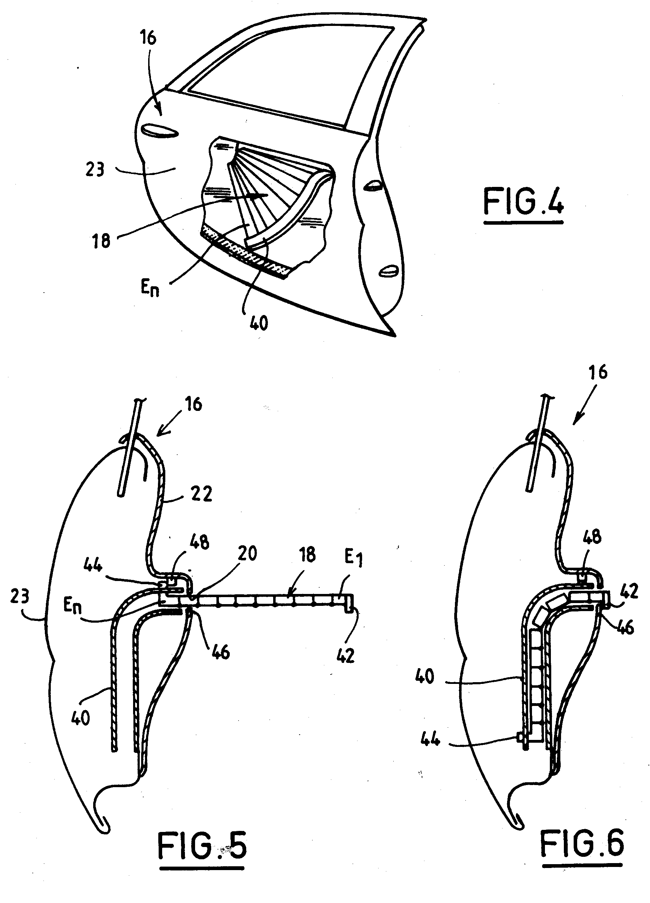

La tablette 18 est déplaçable entre une position escamotée à l'intérieur de la portière 16, telle que représentée sur les figures 6 à 8, et une position d'utilisation à l'extérieur de la portière 16, telle que représentée aux figures 1 et 5. Dans cette dernière position, la tablette 18 présente une face d'appui 24 sensiblement horizontale pour un utilisateur.

On notera que la fente 20 est sensiblement parallèle à la face d'appui 24.

On a également représenté sur la figure 1 une baguette décorative 26 prolongeant longitudinalement la fente 20.

De préférence, la tablette 18 comprend une série d'éléments allongés successifs E1,E2...En ayant des bords longitudinaux articulés entre eux.

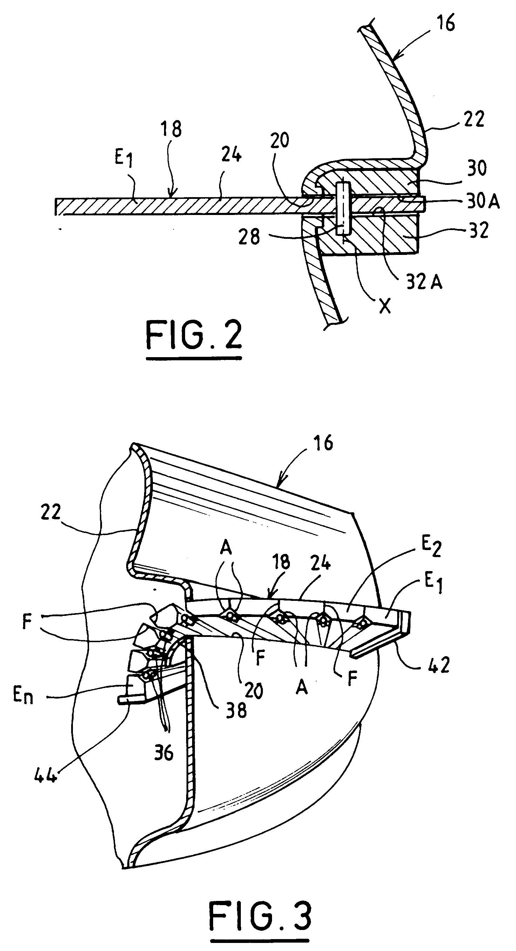

En se référant à la figure 2, on voit qu'une extrémité du premier élément allongé E1 de la série est montée pivotante sur la portière 16 autour d'un axe X sensiblement perpendiculaire à la face d'appui 24 de la tablette.

Les autres éléments allongés E2 à En ne sont pas articulés autour de l'axe X mais seulement reliés au premier élément allongé E1 directement ou par l'intermédiaire les uns des autres.

L'axe de pivotement X est matérialisé par une broche 28 disposée à proximité d'une extrémité de la fente 20 d'escamotage et portée par deux flasques 30,32 fixés à l'intérieur de la portière 16, solidairement à la paroi 22. Ainsi, lorsque la tablette 18 est en position d'utilisation, les éléments articulés E1 à En s'étendent à travers la fente 20.

La broche 28 est placée plus près de la paroi 22 que de la paroi 23.

L'organe en caisson 16 comprend des moyens de rigidification de la tablette 18 en position d'utilisation. Ces moyens comprennent deux faces en regard 30A,32A des flasques 30,32. Ces faces 30A,32A sont sensiblement parallèles à la face d'appui 24 de la tablette et s'étendent dans le prolongement des bords longitudinaux de la fente 20.

Lorsque la tablette 18 est en position d'utilisation, les extrémités internes à la portière 16 des éléments articulés E1 à En s'étendent entre les faces de rigidification 30A,32A, avec un faible jeu, de manière à immobiliser les éléments articulés entre eux et rigidifier la tablette.

On notera que la face 30A permet également de maintenir la tablette 18 en porte-à-faux.

Il est à remarquer que la face supérieure 30A peut s'étendre sur toute la longueur de la fente 20 pour avoir un meilleur maintien en porte-à-faux, ce qui n'est pas le cas de la face inférieure 32A, car la tablette doit pouvoir se courber lors de son escamotage.

En se référant notamment aux figures 1 et 3, on voit que chaque élément E1 à En a une forme générale prismatique convergente vers son extrémité rapprochée de l'axe de pivotement X.

En variante, au moins un élément articulé peut être parallélépipédique, par exemple le premier élément E1.

Les extrémités éloignées de l'axe de pivotement X des éléments articulés forment un bord courbe 34 de la tablette 18.

Ainsi, la tablette 18 a, en position d'utilisation, une forme générale d'éventail déployé.

Les bords d'articulation de deux éléments successifs E1 à En sont constitués par des faces longitudinales adjacentes F de ces éléments. Ces faces F sont délimitées par des arêtes jointives A d'articulation, éventuellement biseautées comme cela est représenté sur la figure 3.

Sur cette figure, on voit que les arêtes jointives A sont reliées l'une à l'autre par au moins une articulation 36 rapportée, formant charnière, d'axe sensiblement parallèle à la direction longitudinale. Les articulations 36 sont disposées sur une face de la tablette opposée à sa face d'appui, dans des logements délimités par les arêtes biseautées.

En variante, l'articulation reliant deux éléments successifs E1 à En peut être formée par une membrane souple venue de matière avec ces éléments, ces derniers étant par exemple en plastique.

Le fait qu'en position d'utilisation, les articulations 36 soient situées à la partie inférieure de la tablette et que les faces F soient jointives interdit de courber la tablette 18 autour d'un centre de courbure disposé du côté de la face d'appui de la tablette 18, mais permet de courber cette tablette 18 autour d'un centre de courbure disposé du côté opposé au précédent.

Bien entendu, l'homme du métier choisira la hauteur et la section des éléments E1 à En de manière à assurer la rigidité de la tablette en position déployée.

La tablette 18 est guidée à l'intérieur de la portière 16 par des moyens agencés à l'intérieur de cette portière.

Sur la figure 3, on a représenté des moyens de guidage de la tablette comprenant un rebord courbe 38 fixé à l'intérieur de la portière 16, dans le prolongement d'un bord longitudinal de la fente 20. Ce rebord peut constituer un prolongement du flasque 32.

Ce rebord 38 permet de maintenir la partie de la tablette 18, s'étendant à l'intérieur de la portière 16, écartée de la paroi 22.

En variante, comme cela est représenté sur les figures 4 à 8, les moyens de guidage de la tablette 18 peuvent comporter un rail 40, fixé à l'intérieur de la portière 16, destiné à guider les extrémités éloignées de l'axe de pivotement X des éléments E1 à En.

Le premier élément E1 et le dernier élément En de la série comprennent des butées de limitation du déplacement de cette tablette constituées, par exemple, par des rebords 42,44 de ces éléments faisant saillie perpendiculairement à la direction de déplacement de la tablette.

La butée 42 du premier élément E1 est destinée à coopérer avec une butée complémentaire constituée par la face externe à la portière de la paroi 22 au voisinage d'un bord longitudinal 46 de la fente 20. La butée 44 du dernier élément En est destinée à coopérer avec la face interne à la portière de la paroi 22 au voisinage d'un bord longitudinal de la fente ou une butée complémentaire 48 disposée à l'intérieur de la portière 16 solidairement à la paroi 22 (voir notamment figures 5 et 6).

En se référant à nouveau à la figure 1, on voit que le contour du premier élément E1 prolonge le contour de la baguette décorative 26 lorsque la tablette 18 est dans sa position escamotée.

Un évidement 50 de préhension de la tablette 18, accessible depuis l'habitacle du véhicule, est ménagé dans le contour du premier élément E1. Cet évidement 50 permet de manoeuvrer la tablette entre sa position d'utilisation et sa position d'escamotage.

L'évidement peut être ménagé sur la face du premier élément E1 opposée à la face d'appui de la tablette.

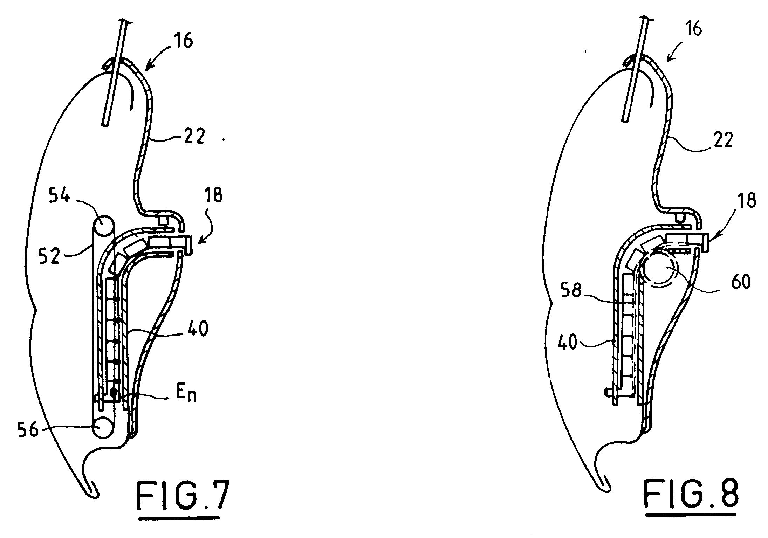

On décrira ci-dessous, en se référant aux figures 7 et 8, des moyens d'entraînement de la tablette 18 qui peuvent être éventuellement motorisés.

Sur la figure 7, on a représenté des moyens d'entraînement de la tablette comprenant un câble sans fin 52, ou analogue, logé dans la portière et tendu entre deux poulies 54,56. Le dernier élément En de la tablette est accroché de façon connue en soi à un brin du câble 52.

Une des poulies 54,56 est reliée à des moyens d'entraînement classiques, manuels ou motorisés. Le déplacement du câble provoque le déplacement de la tablette 18 entre sa position escamotée (représentée à la figure 7) et sa position d'utilisation.

Sur la figure 8, on a représenté des moyens d'entraînement de la tablette comprenant une crémaillère 58, solidaire de la tablette 18, engrenant avec une roue dentée 60 montée rotative dans la portière 16. Cette roue 60 est reliée à des moyens d'entraînement classiques manuels ou motorisés.

La rotation de la roue dentée 60 provoque le déplacement de la tablette 18 entre sa position escamotée (représentée à la figure 8) et sa position d'utilisation.

L'invention ne se limite pas aux modes de réalisation représentés sur les figures.

En particulier, la tablette peut être agencée selon l'invention dans un organe en caisson quelconque, autre qu'une portière.

Par ailleurs, l'agencement selon l'invention peut comporter des moyens classiques absorbant ou réduisant les vibrations auxquelles les différentes pièces de l'agencement peuvent être soumises lorsque le véhicule est en fonctionnement.

L'invention comporte de nombreux avantages.

En particulier, la tablette déformable comprenant des éléments articulés entre eux est facilement escamotable dans l'organe en caisson dans lequel elle est agencée.

Ainsi, l'agencement de la tablette selon l'invention ne réduit pas l'espace disponible dans l'habitacle pour les passagers.

En outre, les éléments articulés peuvent être recouverts d'une matière décorative permettant de cacher les fentes séparant les éléments constituant la tablette et présenter ainsi une surface uniforme pour l'utilisateur; cette matière devra être suffisamment souple et élastique pour permettre les mouvements de la tablette.

Enfin, le fait que le contour du premier élément E1 soit en continuité avec la baguette décorative 26 améliore l'esthétique de la portière et permet de dissimuler la tablette en position rangée, d'autant plus que l'évidement de préhension 50 peut se trouver sur la face inférieure du premier élément E1.

## Revendications

1. Agencement d'une tablette (18) dans un organe en caisson (16) d'un véhicule automobile, du type dans lequel la tablette (18) est déformable et est déplaçable en se déformant à travers une fente (20) ménagée dans une paroi (22) délimitant l'organe en caisson, entre une position escamotée à l'intérieur de l'organe en caisson et une position d'utilisation à l'extérieur de cet organe dans laquelle la tablette (18) présente une face d'appui (24) pour un utilisateur, la tablette (18) comprenant une série d'éléments allongés successifs (E1 à En) ayant des bords longitudinaux (F) articulés entre eux, caractérisé en ce qu'une extrémité du premier élément articulé (E1) de la série est montée pivotante sur l'organe en caisson (16) autour d'un axe (X) sensiblement perpendiculaire à la face d'appui (24) de la tablette, disposé à une extrémité de la fente d'escamotage (20), l'organe en caisson (16) comprenant des moyens de rigidification de la tablette (18) en position d'utilisation, disposés dans le prolongement de la fente (20) à l'intérieur de l'organe en caisson, de manière que, lorsque la tablette est en position d'utilisation, les éléments articulés (E1 à En) traversent la fente (20) et les extrémités situées à l'intérieur de l'organe en caisson (16) de certains de ces éléments, coopèrent avec les moyens de rigidification.

2. Agencement selon la revendication 1, caractérisé en ce que les moyens de rigidification comprennent deux faces fixes (30A,32A) sensiblement parallèles à la face d'appui (24) de la tablette, entre lesquelles s'étendent les extrémités internes des éléments articulés (E1 à En).

3. Agencement selon la revendication 2, caractérisé en ce que l'axe (X) de pivotement du premier élément articulé (E1) est matérialisé par une broche (28) portée par deux flasques (30,32) définissant les faces (30A,32A) de rigidification de la tablette (18).

4. Agencement selon l'une quelconque des revendications 1 à 3, caractérisé en ce qu'au moins certains éléments articulés (E1 à En) ont une forme générale convergente vers leur extrémité proche de l'axe de pivotement (X).

5. Agencement selon l'une quelconque des revendications 1 à 4, caractérisé en ce que les extrémités éloignées de l'axe de pivotement (X) des éléments articulés (E1 à En) forment un bord courbe (34) de la tablette.

6. Agencement selon l'une quelconque des revendications 1 à 5, caractérisé en ce que les éléments articulés (E1 à En) ont une forme générale sensiblement prismatique, les bords articulés de deux éléments successifs étant constitués par des faces longitudinales adjacentes (F), ces faces (F) étant délimitées par des arêtes jointives (A) d'articulation, éventuellement biseautées.

7. Agencement selon la revendication 6, caractérisé en ce que les arêtes jointives (A) sont reliées entre elles par au moins une articulation (36) rapportée formant charnière.

8. Agencement selon la revendication 6, caractérisé en ce que les arêtes jointives (A) sont reliées entre elles par au moins une articulation venue de matière avec les éléments articulés (E1 à En), ces éléments étant notamment en plastique.

9. Agencement selon la revendication 7 ou 8, caractérisé en ce que l'articulation est agencée sur une face de la tablette (18) opposée à sa face d'appui (24).

10. Agencement selon l'une quelconque des revendications précédentes, caractérisé en ce qu'il comprend des moyens (38;40) de guidage de la tablette agencés à l'intérieur de l'organe en caisson (16).

11. Agencement selon la revendication 10, caractérisé en ce que les moyens de guidage comprennent un rebord courbe (38) disposé dans le prolongement d'un bord longitudinal de la fente (20), permettant de maintenir la partie de la tablette (18), s'étendant à l'intérieur de l'organe en caisson (16), écartée de la paroi (22) de cet organe dans laquelle est ménagée la fente (20).

12. Agencement selon la revendication 10, caractérisé en ce que les moyens de guidage comprennent un rail (40) de guidage des extrémités éloignées de l'axe de pivotement (X) des éléments articulés (E1 à En).

13. Agencement selon l'une quelconque des revendications 1 à 12, caractérisé en ce que les premier et dernier éléments de la série (E1,En) comportent des butées (42,44) de limitation du déplacement de cette tablette coopérant avec des butées complémentaires fixes (46,48) ménagées respectivement à l'extérieur et à l'intérieur de l'organe en caisson (16).

14. Agencement selon l'une quelconque des revendications 1 à 13, caractérisé en ce que la tablette (18) est déplaçable à l'aide de moyens d'entraînement comprenant un câble sans fin (52) logé dans l'organe en caisson (16), entraîné par des moyens manuels ou motorisés, auquel est accroché un élément (En) articulé de la tablette (18).

15. Agencement selon l'une quelconque des revendications 1 à 13, caractérisé en ce que la tablette (18) est déplaçable à l'aide de moyens d'entraînement comprenant une crémaillère (58) solidaire de la tablette (18) engrenant avec une roue dentée (60) montée rotative dans l'organe en caisson (16), entraînée par des moyens manuels ou motorisés.

16. Agencement selon l'une quelconque des revendications 1 à 13, caractérisé en ce que la tablette (18) est déplaçable à l'aide de moyens de préhension (50) agencés sur le premier élément articulé (E1) de la série, notamment un évidement de préhension ménagé dans cet élément.

17. Agencement selon l'une quelconque des revendications 1 à 16, caractérisé en ce que l'organe en caisson (16) est délimité par deux parois opposées (22,23) dont l'une est celle dans laquelle est ménagée la fente (20), et en ce que l'axe de pivotement (X) est placé plus près de la paroi (22) dans laquelle est ménagée la fente que de la paroi opposée (23).

18. Agencement selon l'une quelconque des revendications précédentes, caractérisé en ce que la tablette (18) a, en position d'utilisation, une forme générale d'éventail déployé.

19. Agencement selon l'une quelconque des revendications précédentes, caractérisé en ce que l'organe en caisson forme une portière (16) du véhicule automobile.

## Claims

1. Arrangement of a shelf (18) in a box member (16) of a motor vehicle, of the type in which the shelf (18) is deformable and is displaceable on becoming deformed through a slot (20) formed in a wall (22) delimiting the box member, between a retracted position inside the box member and a position of use outside of this member in which the shelf (18) presents a support face (24) for a user, the shelf (18) comprising a series of successive long-shaped elements (E1 to En) having longitudinal edges (F) articulated with each other, characterized in that one end of the first articulated element (El) of the series is mounted in a pivoting manner on the box member (16) about an axis (X) substantially perpendicular to the support face (24) of the shelf, disposed at one end of the retraction slot (20), the box member (16) comprising means of rigidifying the shelf (18) in the position of use, disposed in alignment with the slot (20) inside the box member, in such a way that, when the shelf is in the position of use, the articulated elements (E1 to En) traverse the slot (20) and the ends situated inside the box member (16) of certain of these elements, cooperate with the rigidifying means.

2. Arrangement according to claim 1, characterized in that the rigidifying means comprise two fixed faces (30A, 32A) substantially parallel with the support surface (24) of the shelf, between which extend the inside ends of the articulated elements (E1 to En).

3. Arrangement according to claim 2, characterized in that the pivoting axis (X) of the first articulated element (E1) is materialised by a pin (28) carried by two cheeks (30, 32) defining the rigidifying faces (30A, 32A) of the shelf (18).

4. Arrangement according to any one of claims 1 to 3, characterized in that at least certain articulated elements (E1 to En) have a shape which is generally convergent towards their ends close to the pivoting axis (X).

5. Arrangement according to any one of the claims 1 to 4, characterized in that the ends distant from the pivoting axis (X) of the articulated elements (E1 to En) form a curved edge (34) of the shelf.

6. Arrangement according to any one of claims 1 to 5, characterized in that the articulated elements (E1 to En) have a general shape which is substantially prismatic, the articulated edges of two successive elements being constituted by adjacent longitudinal articulation faces (F), these faces (F) being delimited by contiguous articulation edges (A), possibly bevelled.

7. Arrangement according to claim 6, characterized in that the contiguous edges (A) are connected to each other by at least one added articulation (36) forming a hinge.

8. Arrangement according to claim 6, characterized in that the contiguous edges (A) are connected to each other by at least one articulation formed from the material of the articulated elements (E1 to En), these elements being made of plastic in particular.

9. Arrangement according to claim 7 or 8, characterized in that the articulation is fitted to a face of the shelf (18) opposite to its support face (24).

10. Arrangement according to any one of the preceding claims, characterized in that it comprises means (38; 40) of guiding the tray fitted inside the box member (16).

11. Arrangement according to claim 10, characterized in that the guidance means comprise a curved rim (38) disposed in the extension of a longitudinal edge of the slot (20), allowing the section of the shelf (18) extending inside the box member (16) to be maintained separated from the wall (22) of this member in which the slot (20) is formed.

12. Arrangement according to claim 10, characterized in that the guidance means comprise a guide rail (40) for the ends of the articulated elements (E1 to En) which are distant from the pivoting axis (X).

13. Arrangement according to any one of the claims 1 to 12, characterized in that the first and last elements of the series (E1, En) comprise stops (42, 44) for limiting the displacement of this shelf and cooperating with complementary stops (46, 48) respectively formed on the inside and on the outside of the box member (16).

14. Arrangement according to any one of claims 1 to 13, characterized in that the shelf (18) is displaceable with the help of drive means comprising an endless cable (52) housed inside the box member (16), driven by manual or motorised means, to which is attached an articulated element (En) of the shelf (18).

15. Arrangement according to any one of claims 1 to 13, characterized in that the shelf (18) is displaceable with the help of drive means comprising a rack (58) integral with the shelf (18) meshing with a toothed wheel (60) mounted in a rotary manner inside the box member (16) and driven by manual or motorised means.

16. Arrangement according to any one of claims 1 to 13, characterized in that the shelf (18) is displaceable with the help of grasping means (50) fitted to the first articulated element (E1) of the series, in particular a grasping recess formed in this element.

17. Arrangement according to any one of claims 1 to 16, characterized in that the box member (16) is delimited by two opposite walls (22, 23) one of which is the one in which is formed the slot (20), and in that the pivoting axis (X) is placed closer to the wall (22) in which the slot is formed than to the opposite wall (23).

18. Arrangement according to any one of the preceding claims, characterized in that the shelf (18) has, in its position of use, the general shape of an opened-out fan.

19. Arrangement according to any one of the preceding claims, characterized in that the box member forms a door (16) of the motor vehicle.

## Patentansprüche

1. Anordnung einer Tischplatte (18) in einem Karosserieelement (16) eines Kraftfahrzeugs, derart, daß die Tischplatte (18) verformbar und verschiebar ist, indem sie sich durch einem in einer das Karosserieelement begrenzenden Wand (22) ausgesparten Schlitz (20) zwischen einer zusammengeklappten Position im Karosserieelement und einer Verwendungsposition außerhalb dieses Elements in der die Tischplatte (18) eine Abstützfläche (24) für den Benutzer bietet, verformt, wobei die Tischplatte (18) eine Reihe aufeinanderfolgender länglicher Elemente (E1 bis En) mit aneinander angelenkten longitudinalen Seitenflächen (F) enthält, **dadurch gekennzeichnet, daß** ein Ende eines ersten angelenkten Elements (E1) der Reihe arm Karosserieelement (16) im eine zur Abstützfläche (24) der Tischplatte im wesentlichen senkrechte Achse (X) schwenkbar angebracht ist und an einem Ende des Einfahrschlitzes (20) angeordnet ist, wobei das Karosserieelement (16) Mittel zur Versteifung der Tischplatte (18) in der Verwendungsposition enthält, die in der Verlängerung des Schlitzes (20) innerhalb des Karosserieelements in der Weise angeordnet sind, daß bei in der Verwendungsposition befindlicher Tischplatte die angelenkten Elemente (E1 bis En) durch den Schlitz (20) verlaufen und die innerhalb des Karosserieelements (16) befindlichen Enden bestimmter dieser Elemente mit den Versteifungsmitteln zusammenwirken.

2. Anordnung nach Anspruch 1, dadurch gekennzeichnet, daß die Versteifungsmittel zwei feste Flächen (30A, 32A) enthalten, die zur Abstützfläche (24) der Tischplatte im wesentlichen parallel sind und zwischen denen sieh die inneren Enden der angelenkten Elemente (E1 bis En) erstrecken.

3. Anordnung nach Anspruch 2, dadurch gekennzeichnet, daß die Schwenkachse (X) des ersten angelenkten Elements (E1) durch einen Stift (28) verwirklicht ist, der von zwei Flanschen (30, 32) getragen wird, die die Versteifungsflächen (30A, 32A) der Tischplatte (18) definieren.

4. Anordnung nach irgendeinem der Ansprüche 1 bis 3, dadurch gekennzeichnet, daß wenigstens bestimmte angelenkte Elemente (E1 bis En) eine allgemeine Form besitzen, die sich zum nahen Ende der Schwenkachse (X) verjüngt.

5. Anordnung nach irgendeinem der Ansprüche 1 bis 4, dadurch gekennzeichnet, daß die von der Schwenkachse (X) der angelenkten Elemente (E1 bis En) entfernten Enden eine gekrümmte Seitenfläche (34) der Tischplatte bilden.

6. Anordnung nach irgendeinem der Ansprüche 1 bis 5, dadurch gekennzeichnet, daß die angelenkten Elemente (E1 bis En) eine allgemeine Form haben, die im wesentlichen prismenförmig ist, wobei die aneinander angelenkten Seitenflächen zweier aufeinanderfolgender Elemente durch benachbarte longitudinale Flächen (F) gebildet sind, wobei diese Flächen (F) durch nebeneinanderliegende Schwenkkanten (A) begrenzt sind, die eventuell angefast sind.

7. Anordnung nach Anspruch 6, dadurch gekennzeichnet, daß die nebeneinanderliegenden Kanten (A) untereinander über wenigstens ein ein Scharnier bildendes Gelenk (36) verbunden sind.

8. Anordnung nach Anspruch 6, dadurch gekennzeichnet, daß die nebeneinanderliegenden Kanten (A) miteinander durch wenigstens ein einteilig mit den angelenkten Elementen (E1 bis En) ausgebildetes Gelenk verbunden sind, wobei diese Elemente insbesondere aus Kunststoff sind.

9. Anordnung nach Anspruch 7 oder 8, dadurch gekennzeichnet, daß das Gelenk an einer der Abstützfläche (24) gegenüberliegenden Fläche der Tischplatte (18) angeordnet ist.

10. Anordnung nach irgendeinem der vorangehenden Ansprüche, dadurch gekennzeichnet, daß sie Mittel (38; 40) zum Führen der Tischplatte enthält, die in dem Karosserieelement (16) angeordnet sind.

11. Anordnung nach Anspruch 10, dadurch gekennzeichnet, daß die Führungsmittel eine gekrümmte Leiste (38) enthalten, die in der Verlängerung eines longitudinalen Randes des Schlitzes (20) angeordnet ist und ermöglicht, denjenigen Teil der Tischplatte (18) zu halten, der sich in das Karosserieelement (16) erstreckt und von der Wand (22) dieses Elements, in der der Schlitz (20) ausgebildet ist, beabstandet ist.

12. Anordnung nach Anspruch 10, dadurch gekennzeichnet, daß die Führungsmittel eine Schiene (40) zum Fuhren der von der Schwenkachse (X) der angelenkten Elemente (E1 bis En) enfernten Enden enthalten.

13. Anordnung nach irgendeinem der Ansprüche 1 bis 12, dadurch gekennzeichnet, daß die ersten und letzten Elemente der Reihe (E1, En) Anschläge (42, 44) für die Begrenzung der Verschiebung dieser Tischplatte enthalten, die mit festen komplementären Anschlägen (46, 48) zusammenwirken, die außerhalb und innerhalb des Karosscrieelements (16) ausgebildet sind.

14. Anordnung nach irgendeinem der Ansprüche 1 bis 13, dadurch gekennzeichnet, daß die Tischplatte (18) mit Hilfe von Antriebsmitteln versehiebbar ist, die ein Endlosseil (52) umfassen, das sich im Karosserieelement (16) befindet und durch Hand- oder Motormittel angetrieben wird und an dem ein angelenktes Element (En) der Tischplatte (18) eingehakt ist.

15. Anordnung nach irgendeinem der Ansprüche 1 bis 13, dadurch gekennzeichnet, daß die Tischplatte (18) mit Hilfe von Antriebsmitteln verschiebbar ist, die eine mit der Tischplatte (18) verbundene Zahnstange (58) enthalten, die mit einem Zahnrad (60) in Eingriff ist, das im Karosserieelement (16) drehbar angebracht ist und durch die Hand- oder Motormittel angetrieben wird.

16. Anordnung nach irgendeinem der Ansprüche 1 bis 13, dadurch gekennzeichnet, daß die Tischplatte (18) mit Hilfe von Griffmitteln (50) verschiebbar ist, die am ersten angelenkten Element (E1) der Reihe angeordnet sind, insbesondere mit Hilfe einer Griffmulde, die in diesem Element ausgebildet ist.

17. Anordung nach irgendeinem der Ansprüche 1 bis 16, dadurch gekennzeichnet, daß das Karosserieelement (16) durch zwei gegenüberliegende Wände (22, 23) begrenzt ist, wovon eine diejenige ist, in der der Schlitz (20) ausgebildet ist, und daß die Schwenkachse (X) näher an der Wand (22), in der der Schlitz ausgebildet ist, als an der gegenüberliegenden Wand (23) angeordnet ist.

18. Anordnung nach irgendeinem der vorangebenden Ansprüche, dadurch gekennzeichnet, daß die Tischplatte (18) in einer Verwendungsposition die allgemeine Form eines ausgebreiteten Fächers hat.

19. Anordnung nach irgendeinem der vorangehenden Ansprüche, dadurch gekennzeichnet, daß das Karosserieelement eine Tür (16) des Kraftfahrzeugs bildet.
